(19) Europäisches Patentamt

European Patent Office

Office européen des brevets

(11) EP 2 887 347 B1

(12) **EUROPEAN PATENT SPECIFICATION**

(45) Date of publication and mention
of the grant of the patent:
**02.11.2016 Bulletin 2016/44**

(51) Int Cl.:
***G10L 15/02*** *(2006.01)*      *G10L 15/10* *(2006.01)*

(21) Application number: **14003047.9**

(22) Date of filing: **03.09.2014**

(54) **Phoneme signature candidates for speech recognition**

Phonemsignaturkandidaten zur Spracherkennung

Candidats de signature de phonèmes pour reconnaissance vocale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2013 US 201314133639**

(43) Date of publication of application:
**24.06.2015 Bulletin 2015/26**

(73) Proprietor: **SAP SE**
**69190 Walldorf (DE)**

(72) Inventor: **Chekhter, Kirill**
**69190 Walldorf (DE)**

(74) Representative: **Müller-Boré & Partner**
**Patentanwälte PartG mbB**
**Friedenheimer Brücke 21**
**80639 München (DE)**

(56) References cited:
**GB-A- 2 358 253      US-A- 4 813 076
US-A- 5 708 759      US-A1- 2010 114 576**

• **MORGAN N ET AL: "Continuous speech
recognition using PLP analysis with multilayer
perceptrons", SPEECH PROCESSING 1.
TORONTO, MAY 14 - 17, 1991; [INTERNATIONAL
CONFERENCE ON ACOUSTICS, SPEECH &
SIGNAL PROCESSING. ICASSP], NEW YORK,
IEEE, US, vol. CONF. 16, 14 April 1991
(1991-04-14), pages 49-52, XP010043820, DOI:
10.1109/ICASSP.1991.150275 ISBN:
978-0-7803-0003-3**

## Description

## BACKGROUND

US 5 708 759 A relates to computer speech recognition based on time-domain phoneme waveform identification. In Mainwave-Ripple Model (MRM) analysis, the waveform is located in a short interval called a frame, and waveform structural features are located and measured, to form a waveform analysis array in terms of fine-structure parameters and main-structure parameters. Analysis can also derive multi-frame pattern analysis arrays. In training mode, phoneme reference arrays are formed by combining a known most-probable analysis array with its corresponding phoneme symbol. In recognition mode, unknown input signal analysis arrays are compared with prestored reference arrays, whereby a best-match recognition is made. Selectable levels of processing provide selectable speed versus accuracy, in terms of protowave, phonode, or phoneme recognition.

US 2010/114576 A1 relates to a speech recognition capability in which words of spoken text are identified based on the contour of sound waves representing the spoken text. Variations in the contour of the sound waves are identified, features are assigned to those variations, and then the features are mapped to sound constructs to provide the words.

GB 2 358 253 A relates to defining a feature parameter (primitive feature parameter) for recognizing the feature of a signal. The primitive feature parameter is self-reorganized by a genetic algorithm (GA), and a new feature parameter (GA feature parameter) is automatically generated. If the result of evaluation of the GA feature parameter by using a distinction index or evaluation index is acceptable, a probability theory, the Dempster and Shafer probability theory, and a possibility function are applied to the GA feature parameter to generate a possibility distribution function and a judgement criterion for distinction;

US 4 813 076 relates to a speech processing apparatus including an electronic memory and circuitry that derives from speech sets of digital values representative of frequency spectra. The spectra have peaks at frequencies associated therewith. The peaks include a highest magnitude peak for each spectrum. The circuitry also generates an auditory state signal representing the presence or absence of a burst-friction auditory state of the speech. Circuitry further electronically identifies when the auditory state signal indicates the presence of a burst-friction auditory state the highest magnitude peak for each spectrum as well as each peak having a magnitude within a range of magnitudes less than the magnitude of the highest magnitude peak, and selectively stores in distinct locations in the memory respectively representative of normally occurring prominences of a burst-friction sound, the values of frequency of the lowest two frequencies associated with the identified peaks. Other speech processing apparatus and methods are also disclosed.

MORGAN N ET AL: "Continuous speech recognition using PLP analysis with multilayer perceptions", SPEECH PROCESSING 1. TORONTO, MAY 14-17, 1991, [INTERNATIONAL CONFERENCE ON ACOUSTICS, SPEECH & SIGNAL PROCESSING. ICASSP], NEW YORK, IEEE, US, relates to applying the ability of Multilayer Perceptrons (MLPs) to estimate emission probabilities for a Hidden Markov Model to speaker-dependent recognition of continuous speech using discreet, vector-quantized features derived from mel cepstral analysis. The use of continuous features derived by Perceptual Linear Predictive analysis is investigated, the effect of adding temporal features is examined and compared to previously studied use of multi-frame input. Further, comparisons of the MLP and conventional Gaussian classifiers are reported.

Phoneme analysis is a starting point in the process of speech recognition. Hidden Markov Model and Neural Networks based approaches are some of the notable techniques used for phoneme identification. Neural Network based approach starts with spectral analysis of small portions of an incoming speech signal. The results of the spectral analysis are then forwarded to the input of a neural network. However, neural networks have shown relatively less success and are therefore less widely used compared to Hidden Markov Model approach.

Hidden Markov Model is a statistical model representing a Markov process with hidden states, i.e., the process where the actual state of a system is not known to an observer. The observer can judge about the state of the system from a sequence of output parameters. When applied to speech recognition, output of the Hidden Markov Model takes the form of an n-dimensional real vector (where 'n' is a small integer, e.g., less than 15) with its components being 'n' first main coefficients of cepstral decomposition of short frames of an incoming acoustic signal. This transformation is applied repeatedly yielding a cloud in an n-dimensional Euclidean space which can be analyzed statistically. Each phoneme in speech tends to have a different output distribution and thus can be unambiguously identified. The above description broadly outlines Hidden Markov Model approach for speech recognition. Although Hidden Markov Model is a useful model, speech recognition based on Hidden Markov Model requires considerable computing resources. Therefore, Hidden Markov Model based speech recognition may not be implemented in portable electronic devices such as smartphones, tablet computers, etc. To address this, client-server architecture is used where the actual speech recognition is performed at the backend. However, the efficiency of client-server approach is dependent on network speed and availability.

**BRIEF DESCRIPTION OF THE DRAWINGS**

The claims set forth the embodiments with particularity. The embodiments are illustrated by way of examples and not by way of limitation in the figures of the accompanying drawings in which like references indicate similar elements. The embodiments, together with their advantages, may be best understood from the following detailed description taken in conjunction with the accompanying drawings.

FIG. 1 illustrates a speech signal, as an example.
FIG. 2 illustrates a flow diagram of a method for phoneme identification, according to one embodiment.
FIG. 3 illustrates a speech signal divided into frames, according to one example.
FIG. 4 illustrates the concept of a curvature, as an example.
FIG. 5 illustrates curvatures for a speech signal, as an example.
FIG. 6 illustrates a speech signal with calculated curvatures, according to one example.
FIG. 7 illustrates a block diagram of comparing curvatures and coordinates and identifying a corresponding phoneme, according to one embodiment.
FIG. 8 illustrates a block diagram illustrating an implementation scenario, according to one embodiment.
FIG. 9 illustrates a block diagram illustrating an implementation scenario, according to another embodiment.
FIG. 10 is a block diagram of an exemplary computer system according to one embodiment.

**DETAILED DESCRIPTION**

Embodiments of techniques for phoneme signature candidates for speech recognition are described herein. The invention is defined in independent claims 1, 5 and 9. In the following description, numerous specific details are set forth to provide a thorough understanding of the embodiments. One skilled in the relevant art will recognize, however, that the embodiments can be practiced without one or more of the specific details, or with other methods, components, materials, etc. In other instances, well-known structures, materials, or operations are not shown or described in detail.

Reference throughout this specification to "one embodiment", "this, embodiment" and similar phrases, means that a particular feature, structure, or characteristic described in connection with the embodiment is included in at least one of the one or more embodiments. Thus, the appearances of these phrases in various places throughout this specification are not necessarily all referring to the same embodiment. Furthermore, the particular features, structures, or characteristics may be combined in any suitable manner in one or more embodiments.

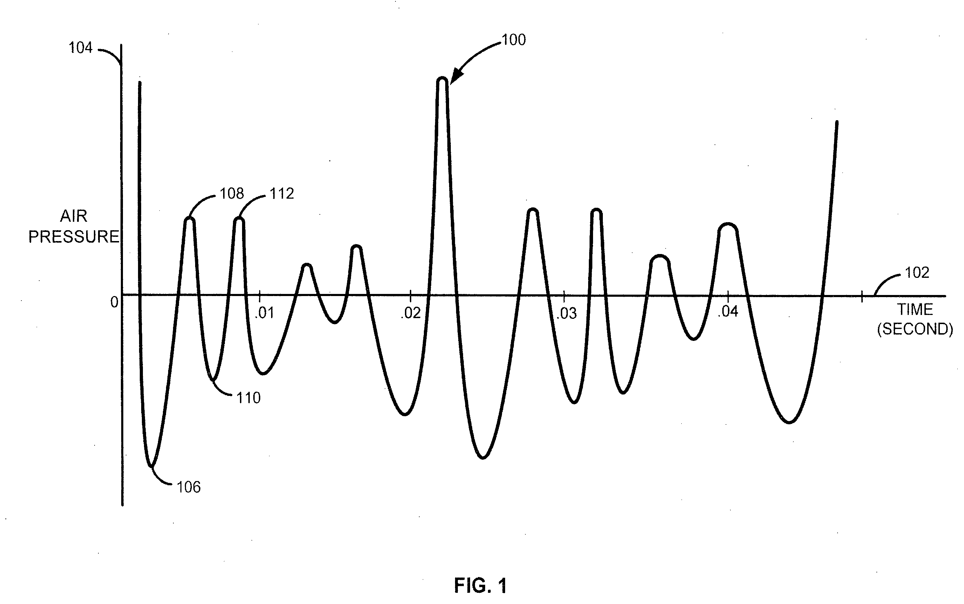

FIG. 1 illustrates a speech signal 100 as an example. A speech signal is an acoustic wave travelling through a medium. Sound propagates as a longitudinal wave and a speech signal can be represented as value of air pressure over a period of time. The speech signal is plotted with time as the X-axis 102 and change in air pressure as the Y-axis 104. A speech signal 100 has several extrema points. An extrema point is a point where the speech signal 100 changes direction. Therefore, extrema points can also be called as the turning points. The speech signal 100 changes direction several times over a period of time, giving rise to several extrema points. For example, the speech signal 100 up to 0.01 seconds includes four extrema points 106, 108, 110, and 112. The speech signal 100 heads downwards, reaches the first extrema point 106 and then turns upward. The speech signal 100 continues to head upwards and turns downward at the second extrema point 108. The speech signal 100 continues to head downwards and turns upward at the third extrema point 110. The speech signal 100 then continues to head upwards and turns downward at the fourth extrema point 112.

It should be understood that the speech signal 100 is shown as an example to provide a conceptual overview. Actual profile of the speech signals can vary and depends on the plotting means, resolution, etc. For example, there can be several extrema points in one-hundredth of a second.

Speech includes a sequence of words. A word includes a combination of phonemes. A phoneme is a smallest unit of speech that can be used to make one word different from another. A phoneme can also be defined as the smallest contrastive linguistic unit. A phoneme is represented between two slashes. For example, for the word "hat" there are three phonemes, namely, "/h/", "/a/", and "/t/". As another example, the word "block" has four phonemes, namely, "/b/", "/l/", "/o/", and "/k/". Phoneme identification is a key step in speech recognition applications such as, for example, voice-to-text applications.

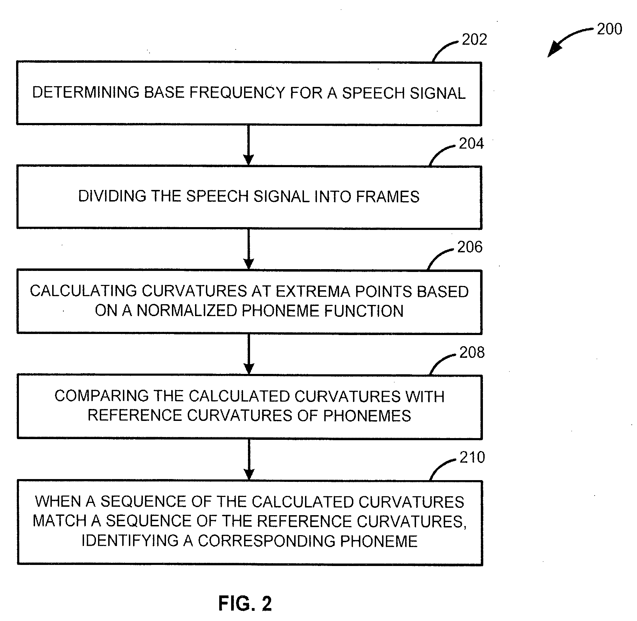

FIG. 2 illustrates an embodiment of a method 200 for phoneme identification. At 202, base frequency or fundamental frequency ($f_0$) for a speech signal is determined. A base frequency is defined as the lowest frequency of a waveform. In one embodiment, a pitch detection technique can be used to estimate the base frequency. Pitch detection techniques can include time domain approaches and frequency domain approaches. Examples of time domain approaches include zero crossings technique, autocorrelation technique, and maximum likelihood technique. Examples of frequency domain approaches include harmonic product spectrum technique, cepstral analysis, and maximum likelihood technique. In one example, autocorrelation functions can be used to estimate the base frequency.

At 204. the speech signal is divided into frames. Several techniques can be used to partition the speech signal into frames. In one embodiment, time-based portioning can be used to divide the speech signal into frames. For example, the speech signal can be divided into frames of 10 milliseconds. In one embodiment, fundamental time period "T" (where $T = 1/f_0$) can be used as a parameter to divide the speech signal. The signal can be divided into frames of time duration equal to one or more fundamental time periods "T". For example, the signal can be divided into frames of "2T" duration.

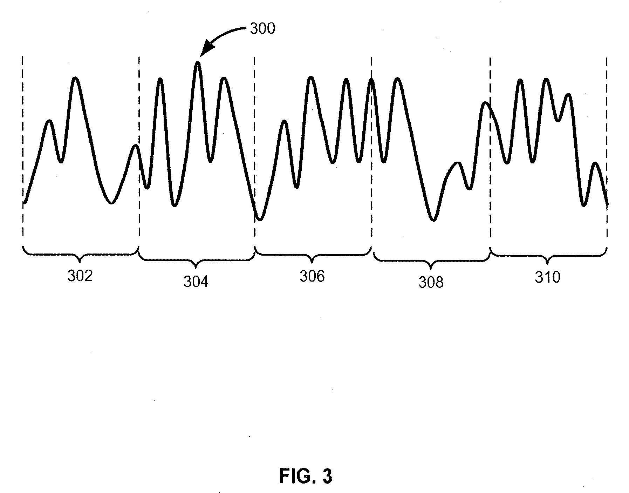

In one embodiment, the time duration of the frames should be more than the fundamental time period. FIG. 3 illustrates a speech signal 300 divided into frames. A portion of the signal between two dotted lines represents a frame. The speech signal 300 is shown to be divided into five frames 302, 304, 306, 308, and 310.

Referring back to FIG. 2, at 206, curvatures are calculated at extrema points of the speech signal. In one embodiment, the curvatures are calculated frame-by-frame, starting from a first frame. In differential geometry, a curvature of a parametrically defined flat curve (i.e., a curve in a two-dimensional plane) " $\vec{r}(t) = \big(x(t), y(t)\big)$" can be determined using the below equation:

$$\eta(t) = \frac{\dot{x}(t)\ddot{y}(t) - \ddot{x}(t)\dot{y}(t)}{\sqrt{\big(\dot{x}(t)^2 + \dot{y}(t)^2\big)^3}} \qquad \dots (1)$$

The dots in the above formula denote derivatives with respect to the curve parameter "t". Geometrically, module of the curvature at a specific point corresponds to the reciprocal of the radius of the circle, best approximating the curvature at that point.

In the field of differential geometry, a flat curve can be restored if curvatures at every point on the curve are known. Based on this, it can be assumed that if curvatures are known at some points, the curve can be restored approximately. Extrema points represent some points on a curve. Extrema points are therefore selected and curvatures are calculated at the extrema points. The curve can be restored approximately but the approximated curve includes enough information to unambiguously restore a phoneme.

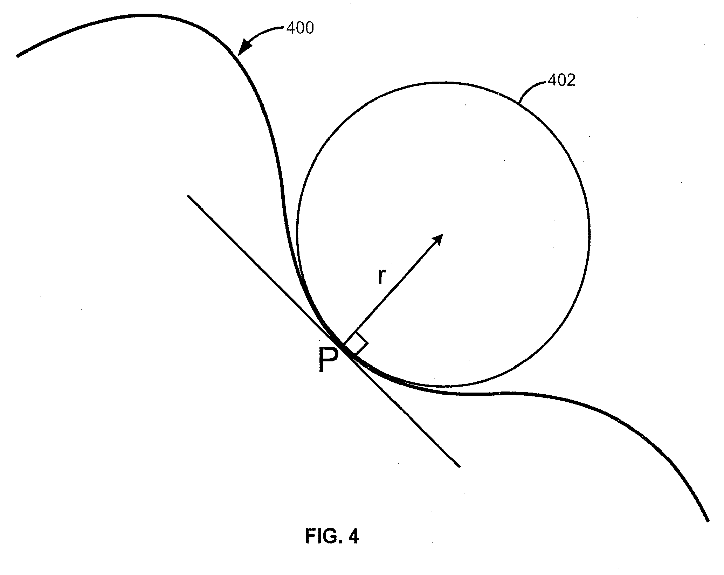

FIG. 4 illustrates a sample flat curve 400. Module of the curvature at a point 'P' on the curve 400 is inversely proportional to the radius 'r' of a circle 402 that best approximates the curvature at the point 'P.' This can be represented as follows:

$$\eta(P) = \frac{1}{r} \qquad \dots (2)$$

In the above equation, "$\eta(P)$" represent module of curvature at the point 'P' and "r" represents radius of the circle. The above equation 1 can be used to calculate curvature for any suitable curve parameterization. If "x-value" is taken as the curve parameter "y = f(x)", then the equation '1' is reduced to the below equation:

$$\eta(x) = \frac{\dfrac{d^2 y}{dx^2}}{\sqrt{\left(1 + \left(\dfrac{dy}{dx}\right)^2\right)^3}} \qquad \dots (3)$$

The above equation 3 can be used for calculating curvatures for a speech signal, using a normalized phoneme function for parameterization.

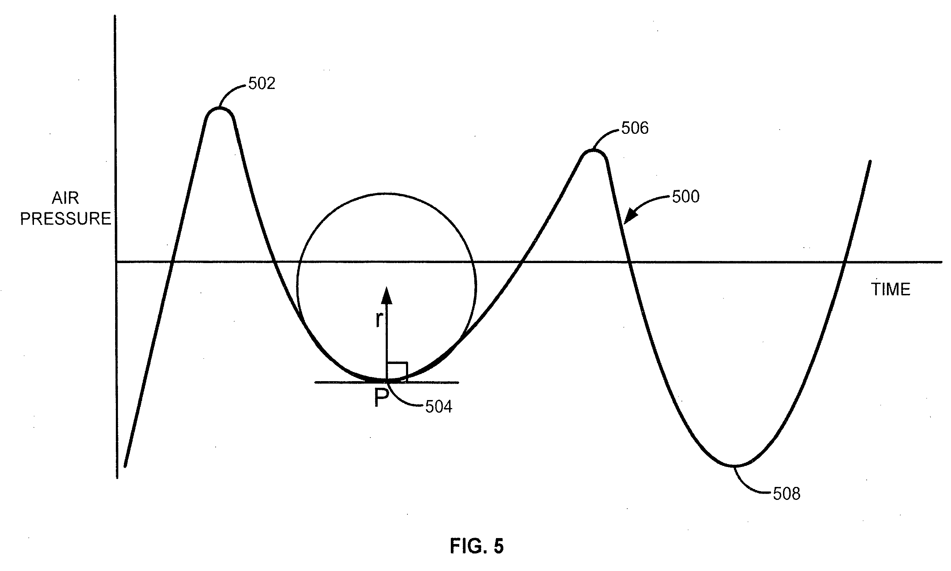

Referring to FIG. 5, a speech signal 500 can be considered as a flat curve. At the extrema points 502, 504, 506, and 508, the speech signal 500 changes direction, resulting in a curvature at the extrema points 502, 504, 506, and 508. Module of the curvature at an extrema point 'P' 504 on the curve, i.e., a portion of the speech signal 500, is inversely proportional to the radius 'r' of a circle 510 that best approximates the curvature at the point 'P' 504. As described previously, a speech signal can be represented as value of air pressure over a period of time. A phoneme is part of a speech signal. Considering time dependence of air pressure, a phoneme therefore can be represented as a function "p(t)" where 't' stands for time.

The time period and amplitude of a phoneme function "p(t)" can vary depending on the context. For example, "$p_1(t)$" can represent a phoneme function for a vowel phoneme corresponding to a first speaker and "$p_2(t)$" can represent a phoneme function for the same vowel phoneme corresponding to a second speaker. Since the time period and amplitude for the same vowel phoneme can vary depending on the speaker or other context, curvatures calculated using the functions "$p_1(t)$" and "$p_2(t)$" can be different and may not have any connection to each other. This problem can be addressed provided that the base frequency and amplitude are known for phonemes, i.e.. for phoneme functions. A normalized phoneme function can then be defined to address the problem of variation due to context. The following equation is the normalized phoneme function "$\varphi(t)$" according to the invention:

$$\varphi(t) = \frac{p(\frac{T}{2\pi}t)}{\max(\left|p^{min}\right|, \left|p^{max}\right|)} \qquad \dots (4)$$

In the above function "$\varphi(t)$", "T" is the fundamental time period ($T = 1/f_0$) of the phoneme function, $p^{min}$ is the minimum value of the phoneme function, $p^{max}$ is the maximum value of the same phoneme function. The minimum value of the phoneme function is the lowest value of the phoneme function in a frame. The maximum value of the phoneme function is the highest value of the phoneme function in the same frame.

As can be seen from equation 4, the normalized phoneme function "$\varphi(t)$" is a function of the time period "T" of the phoneme function "$p(t)$" and a value of the phoneme function. The value of the phoneme function is in the denominator of the equation 4. In the function "$\varphi(t)$", "$\left|p^{min}\right|$" (modulus of $p^{min}$) is the absolute value of the minimum value of the phoneme function and "$\left|p^{max}\right|$" is the absolute value of the maximum value of the phoneme function. As denoted by the expression "may ($\left|p^{min}\right|$), $\left|p^{max}\right|$)", the value of the phoneme function is therefore the larger of the "$\left|p^{min}\right|$" and "$\left|p^{max}\right|$". If "$\left|p^{max}\right|$" is larger than "$\left|p^{min}\right|$", then "$\left|p^{max}\right|$" is selected as the value of the phoneme function, If "$\left|p^{min}\right|$" is larger than "$\left|p^{max}\right|$", then '$\left|p^{min}\right|$" is selected as the value of the phoneme function.

The normalized phoneme function "$\varphi(t)$" defined above will have the same period "$2\pi$" and same range of values for any original phoneme function "$p(t)$". Therefore, the normalized phoneme function "$\varphi(t)$" is volume and pitch independent. Curvatures calculated with respect to normalized phoneme function "$\varphi(t)$" will yield same results regardless of the phoneme function "$p(t)$". As described previously, a function can be used for calculating curvatures. Therefore, the normalized phoneme function "$\varphi(t)$" can be used to calculate curvatures through function parameterization. Curvature based on the normalized phoneme function is, according to the invention, determined using the below equation:

$$\eta(t) = \frac{\frac{d^2\varphi}{dt^2}}{\sqrt{\left(1 + \left(\frac{d\varphi}{dt}\right)^2\right)^3}} \qquad \dots (5)$$

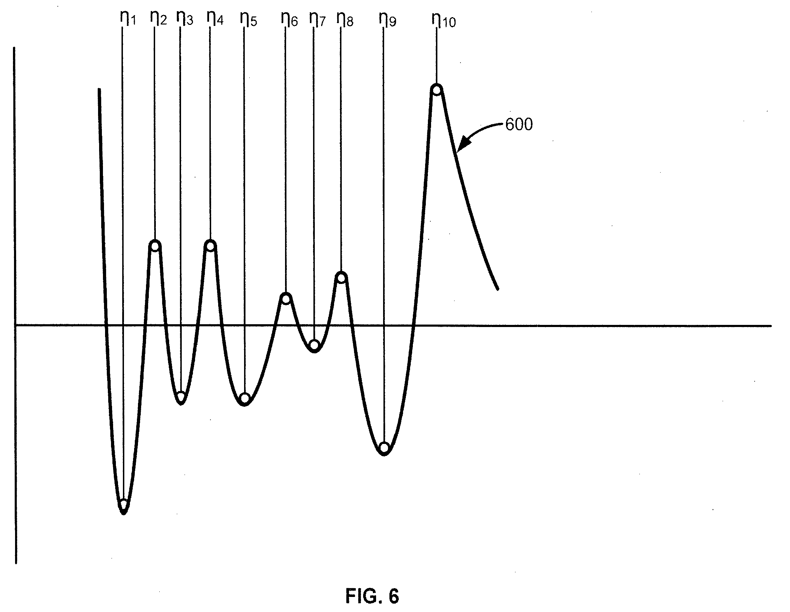

By using the above equation, curvatures are calculated at extrema points of the speech signal, frame-by-frame. That is, a first frame is selected and curvatures of extrema points in the first frame are calculated using the equation 5. Minimum value of the phoneme function "$p^{min}$" used for calculation is the lowest value of the phoneme function in the first frame. Maximum value of the phoneme function "$p^{max}$" used for calculation is the highest value of the phoneme function in the first frame. After curvatures are calculated for the first frame, a second frame is selected and curvatures are calculated for the second frame. This process is continued for rest of the frames in the signal. In this manner, curvatures for all the extrema points of the signal are calculated. As an example, FIG. 6 represents a speech signal 600 including ten extrema points. Curvatures are calculated frame-by-frame for these ten extrema points using the above equation 5. The curvature values $\eta_1$, $\eta_2$, $\eta_3$, $\eta_4$, $\eta_5$, $\eta_6$, $\eta_7$, $\eta_8$, $\eta_9$, and $\eta_{10}$, are then obtained for the extrema points.

Referring back to FIG. 2, at 208, the calculated curvatures are compared with reference curvatures of phonemes. This comparison is performed to identify phonemes in the speech signal. In one embodiment, in addition to comparing the curvatures with reference curvatures, coordinates of the extrema points are compared with reference coordinates of phonemes. As discussed previously, the extrema points are the points at which the curvatures are calculated. Since a speech signal is represented using time on X-axis and pressure on Y-axis, the coordinates of an extrema point include a value of time and a value of pressure, for example, $(t_1, p_1)$. The time and pressure values are therefore determined for the extrema points.

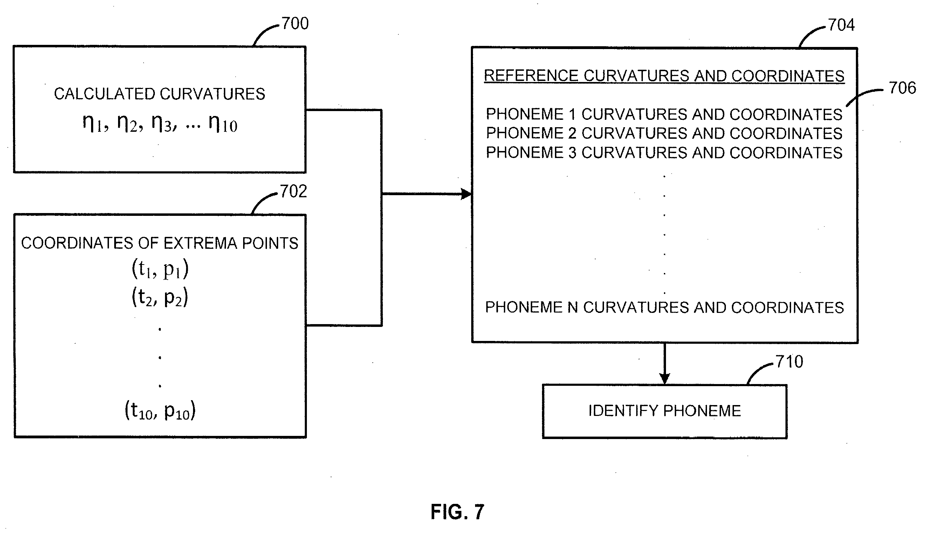

Referring to FIG. 7, taking the example of calculated curvatures $\eta_1$ to $\eta_{10}$, the calculated curvatures $\eta_1$ to $\eta_{10}$ 700 and coordinates 702 of the extrema points $(t_1, p_1)$ to $(t_{10}, p_{10})$ are compared with a reference list 704 including reference curvatures and reference coordinates. The reference list 704 includes reference curvatures and reference coordinates of the extrema points (at which the reference curvatures are calculated) for a plurality of phonemes. For example, the reference list 704 includes reference curvatures and reference coordinates for phoneme '1' as a sub-list 706. Similarly, the reference list 704 includes reference curvatures and reference coordinates for various phonemes as sub-lists or other suitable data structure. In one embodiment, the reference list 704 includes reference curvatures and reference coordinates for all possible phonemes.

Reference curvatures and reference coordinates of the extrema points are pre-determined for the phonemes. Reference curvatures and reference coordinates for a phoneme can be determined by using a standard voice in ideal surrounding conditions such as minimal or no background noise and minimal variation in volume, etc. Phoneme pronunciation by a speaker or a sample of speakers can be captured in ideal conditions. A speech signal for a phoneme can then be processed to calculate coordinates of the extrema points and curvatures at the extrema points. This process can be repeated for a plurality of phonemes and curvatures and coordinates of the extrema points for respective phonemes can be obtained. A collection of the curvatures and coordinates of the extrema points for phonemes makes the reference list 704.

Referring back to FIG. 2, at 210, when a sequence of the calculated curvatures matches a sequence of the reference curvatures, a corresponding phoneme is identified. Therefore, in this embodiment, curvatures are used as potential phoneme signature candidates. In one embodiment, the matching can be performed using approximate-matching techniques. For example, a small percentage difference (e.g., around 1%) between the calculated curvatures and the reference curvatures can be considered as acceptable. If the percentage difference between a calculated curvature value and a reference curvature value is less than an acceptable percentage difference, then it can be considered as a match.

In one embodiment, as discussed earlier, coordinates of the extrema points are compared with a set of the reference coordinates in addition to comparing the curvatures with reference curvatures. In this case, a corresponding phoneme is identified when a sequence of the calculated curvatures match the sequence of the reference curvatures and coordinates of the extrema points corresponding to the sequence of the calculated curvatures match a set of the reference coordinates. Therefore, in one embodiment, curvatures and coordinates of curvatures are used as potential phoneme signature candidates. Approximate-matching techniques can be used for funding a match between coordinates of the extrema points and reference coordinates.

Referring again to FIG. 7, when a sequence of the calculated curvatures match a sequence of reference curvatures in the reference list 704 and coordinates of the extrema points corresponding to the sequence of the calculated curvatures match a set of the reference coordinates in the reference list 704, a corresponding phoneme is identified 710. For example, for a phoneme '/h/', consider that reference curvatures include $\eta^h_1$, $\eta^h_2$, $\eta^h_3$, $\eta^h_4$, and $\eta^h_5$ in the same sequence and a set of the reference coordinates for phoneme '/h/' include $(t^h1, p^h_1)$, $(t^h_2, p^h_2)$, $(t^h_3, p^h_3)$, $(t^h_4, p^h_4)$, and $(t^h_5, p^h_5)$. In the calculated curvatures $\eta_1$ to $\eta_{10}$, if the sequence of the first five calculated curvatures, i.e., $\eta_1$, $\eta_2$, $\eta_3$, $\eta_4$, and $\eta_5$, match the sequence of the reference curvatures $\eta^h_1$, $\eta^h_2$, $\eta^h_3$, and $\eta^h5$ and the coordinates of the first five extrema points $(t_1, p_1)$, $(t_2, p_2)$, $(t_3, p_3)$, $(t_4, p_4)$, and $(t_5, p_5)$ match the set of the reference coordinates $(t^h_1, p^h_1)$, $(t^h_2, p^h_2)$, $(t^h_3, p^h_3)$, $(t^h_4, p^h_4)$, and $(t^h_5, p^h_5)$, then phoneme '/h/' is identified in the speech signal.

As another example, for a phoneme '/a/', consider that reference curvatures include $\eta^a_6$, $\eta^a_7$, and $\eta^a_8$ in the same sequence and a set of the reference coordinates for phoneme '/a/' include $(t^a_6, p^a_6)$, $(t^a_7, p^a_7)$, and $(t^a_8, p^a_8)$. In the calculated curvatures $\eta_1$ to $\eta_{10}$, if the sequence of the calculated curvatures $\eta_6$, $\eta_7$, and $\eta_8$ match the sequence of the reference curvatures $\eta^a_6$, $\eta^a_7$, and $\eta^a_8$ and the coordinates of the extrema points $(t_6, p_6)$, $(t_7, p_7)$, and $(t_8, p_8)$ match the set of the reference coordinates $(t^a_6, p^a_6)$, $(t^a_7, p^a_7)$, and $(t^a_8, p^a_8)$, then phoneme '/a/' is identified in the speech signal. Similarly, other phonemes in the speech signal can be identified.

In one embodiment, curvatures at the extrema points and coordinates of the extrema points are calculated frame-by-frame. Following which, the steps of comparison and phoneme identification are performed. In one embodiment, parallel processing techniques can also be used. For example, curvatures and coordinates are calculated in parallel for a plurality of frames. In one embodiment, phoneme identification can be achieved using curvatures alone. Calculation and comparison of coordinates of the extrema points can be performed depending on factors such as lack of reasonable match between curvatures, available computing resources, or network bandwidth.

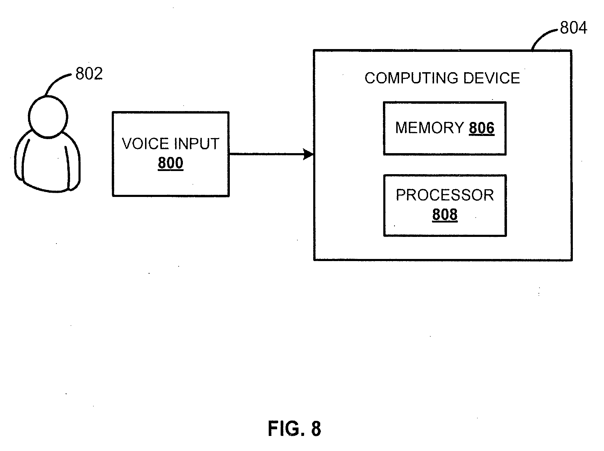

Referring to FIG. 8, an example implementation of phoneme identification is explained. A voice input 800 from a user 802 is received at the computing device 804. The computing device 804 can be any electronic device such as a mobile phone, tablet computer, or laptop computer. The computing device 804 includes a processor 806 and a memory 808. In response to the voice input 800, a speech signal is generated and the base frequency of the speech signal is calculated at the computing device 804. In one embodiment, signal purification procedures such as noise reduction, cutoff of higher frequencies, etc. can be performed at the computing device 804 before processing the speech signal for phoneme identification. The memory 806 stores the reference list including reference curvatures of phonemes and reference coordinates. At the computing device 804, curvatures are calculated at extrema points based on a normalized phoneme function, as described previously. The calculated curvatures are compared with the reference curvatures and coordinates of the extrema points are compared with the reference coordinates. Phonemes in the speech signal are then identified. Depending on the type of application, the identified phonemes can be used in several ways. Considering that the above-described embodiments are used in a voice-to-text application, then the identified phonemes are converted into text and words can be constructed using suitable techniques.

The phoneme identification described above involves algebraic/geometrical calculations which require less computing resources compared to conventional speech recognition techniques such as Hidden Markov Model and Neural Networks approaches. Therefore, phoneme identification and subsequent application of identified phonemes can be performed on computing device itself, thereby making the above-described embodiments network-independent.

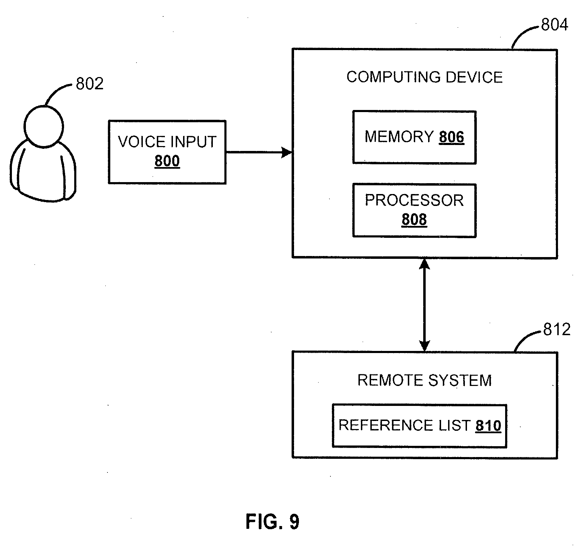

In one embodiment, part of the calculations involved in phoneme identification can be performed in a remote backend system that is accessible over a network. For example, referring to FIG. 9, the reference list 810 including reference curvatures of phonemes and reference coordinates can be stored in a remote system 812. Therefore, data related to calculated curvatures and coordinates of the extrema points can be transmitted to the remote system 812. Comparison of calculated curvatures and coordinates of the extrema points with the reference list can be performed at the remote system 812. Phoneme identification and subsequent procedures such as construction of words can be performed at the remote system 812. Even in such embodiments where a remote system 812 is used, the amount of computing resources required is relatively lower, thereby increasing efficiency. Also, relatively less data is transferred between the computing device 804 and the remote system 812, making speech recognition applications operable over low-bandwidth networks.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs. DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment may be implemented using Java, C++, or other object-oriented programming language and development tools. Another embodiment may be implemented in hard-wired circuitry in place of, or in combination with machine readable software instructions.

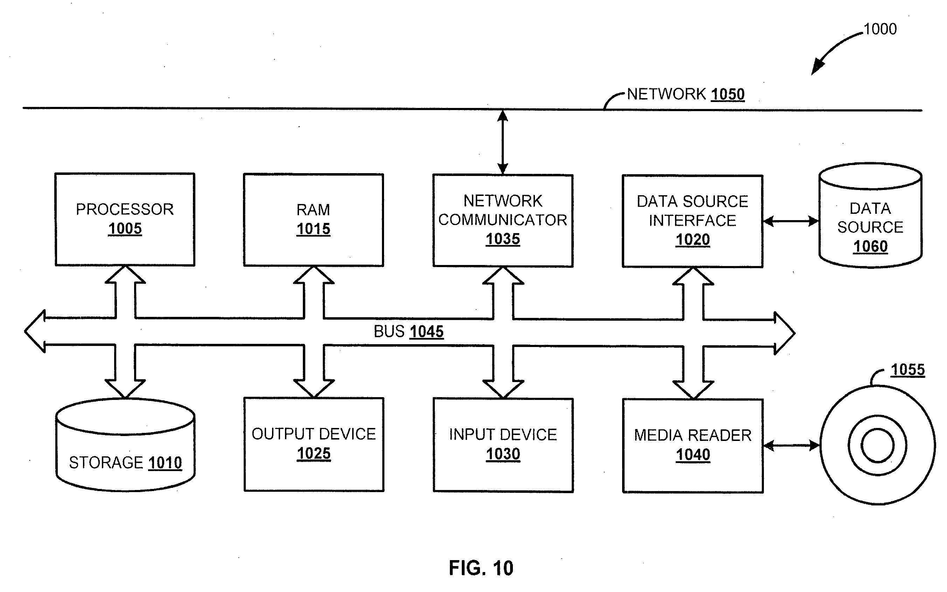

FIG. 10 is a block diagram of an exemplary computer system 1000. The computer system 1000 includes a processor 1005 that executes software instructions or code stored on a computer readable storage medium 1055 to perform the above-illustrated methods. The processor 1005 can include a plurality of cores. The computer system 1000 includes a media reader 1040 to read the instructions from the computer readable storage medium 1055 and store the instructions in storage 1010 or in random access memory (RAM) 1015. The storage 1010 provides a large space for keeping static data where at least some instructions could be stored for later execution. According to some embodiments, such as some in-memory computing system embodiments. the RAM 1015 can have sufficient storage capacity to store much of the data required for processing in the RAM 1015 instead of in the storage 1010. In some embodiments. all of the data required for processing may be stored in the RAM 1015. The stored instructions may be further compiled to generate other representations of the instructions and dynamically stored in the RAM 1015. The processor 1005 reads instructions from the RAM 1015 and performs actions as instructed. According to one embodiment, the computer system 1000 further includes an output device 1025 (e.g., a display) to provide at least some of the results of the execution as output including, but not limited to, visual information to users and an input device 1030 to provide a user or another device with means for entering data and/or otherwise interact with the computer system 1000. Each of these output devices 1025 and input devices 1030 could be joined by one or more additional peripherals to further expand the capabilities of the computer system 1000. A network communicator 1035 may be provided to connect the computer system 1000 to a network 1050 and in turn to other devices connected to the network 1050 including other clients, servers, data stores, and interfaces, for instance. The modules of the computer system 1000 are interconnected via a bus 1045. Computer system 1000 includes a data source interface 1020 to access data source 1060. The data source 1060 can be accessed via one or more abstraction layers implemented in hardware or software. For example, the data source 1060 may be accessed by network 1050. In some embodiments the data source 1060 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g.. data in a file system. XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments. One skilled in the relevant art will recognize, however that the embodiments can be practiced without one or more of the specific details or with other methods, components, techniques, etc. In other instances, well-known operations or structures are not shown or described in detail.

Although the processes illustrated and described herein include series of steps, it will be appreciated that the different embodiments are not limited by the illustrated ordering of steps, as some steps may occur in different orders, some concurrently with other steps apart from that shown and described herein. In addition, not all illustrated steps may be required to implement a methodology in accordance with the one or more embodiments. Moreover, it will be appreciated that the processes may be implemented in association with the apparatus and systems illustrated and described herein as well as in association with other systems not illustrated.

The above descriptions and illustrations of embodiments, including what is described in the Abstract, is not intended to be exhaustive or to limit the one or more embodiments to the precise forms disclosed. While specific embodiments of, and examples for, the invention are described herein for illustrative purposes, various equivalent modifications may be possible within the scope of the invention as defined by the appended claims, as those skilled in the relevant art will recognize. These modifications can be made in light of the above detailed description. Rather, the scope is to be determined by the following claims, which are to be interpreted in accordance with established doctrines of claim construction.

**Claims**

1. A non-transitory computer readable storage medium to tangibly store instructions, which are adapted, when executed by a computer, to cause the computer to perform operations comprising:

    at a computing device, determining base frequency, $f_0$, for a speech signal (100, 500), wherein the speech signal (100, 500) is considered as a flat curve (400), wherein the speech signal (100, 500) comprises extrema points (502, 504, 506, 508) where the speech signal (100, 500) changes direction resulting in a curvature at each extrema point;
    wherein the speech signal (100, 500) is represented as a value of air pressure over a period of time, t and a phoneme that is part of the speech signal (100, 500) is represented by a phoneme function p(t) which represents this air pressure over time;
    calculating the curvatures at the extrema points (502, 504, 506, 508) of the speech signal (100, 500) based on a normalized phoneme function, $\varphi(t)$, wherein the normalized phoneme function $\varphi(t)$ is a function of a time period $T = 1/f_0$ of the phoneme function p(t) and a value $\max(|p^{min}|,|p^{max}|)$ of the phoneme function p(t) by:

$$\varphi(t) = \frac{p(\frac{T}{2\pi}t)}{\max(|p^{min}|,|p^{max}|)};$$

    wherein the value $\max(|p^{min}|,|p^{max}|)$ of the phoneme function p(t) is the larger of an absolute value of maximum value $p^{max}$ of the phoneme function p(t); and
    an absolute value of minimum value $p^{min}$ of the phoneme function p(t);

wherein the calculating of the curvatures at the extrema points (502, 504, 506, 508) is performed by:

$$\eta(t) = \frac{\dfrac{d^2\varphi}{dt^2}}{\sqrt{\left(1+\left(\dfrac{d\varphi}{dt}\right)^2\right)^3}} \ ;$$

comparing the calculated curvatures with reference curvatures of phonemes;
when a sequence of the calculated curvatures matches a sequence of the reference curvatures, identifying a corresponding phoneme.

2. The computer readable storage medium of claim 1, comprising instructions, which when executed by the computer, cause the computer to perform operations further comprising:

dividing the speech signal (100, 500) into frames; and
comparing coordinates of the extrema points (502, 504, 506, 508) of the speech signal (100, 500) with reference coordinates of the phonemes; and

identifying the corresponding phoneme, comprising:

identifying the corresponding phoneme when the sequence of the calculated curvatures match the sequence of the reference curvatures and coordinates of the extrema points (502, 504, 506, 508) of the speech signal (100, 500) corresponding to the sequence of the calculated curvatures match a set of the reference coordinates.

3. The computer readable storage medium of claim 1 or 2, wherein:

the reference curvatures of phonemes and the reference coordinates of the phonemes are stored in the device; or
the reference curvatures of phonemes and the reference coordinates of the phonemes are stored in a remote system accessible over a network.

4. The computer readable storage medium of claim 1, wherein the base frequency for the speech signal (100, 500) is determined in response to a voice input received at the computing device.

5. A computer-implemented method for phoneme identification, the method comprising:

at a computing device, determining base frequency, $f_0$, for a speech signal (100, 500), wherein the speech signal (100, 500) is considered as a flat curve (400), wherein the speech signal (100, 500) comprises extrema points (502, 504, 506, 508) where the speech signal (100, 500) changes direction resulting in a curvature at each extrema point;
wherein the speech signal (100, 500) is represented as a value of air pressure over a period of time, t and wherein a phoneme that is part of the speech signal (100, 500) is represented by a phoneme function p(t) which represents this air pressure over time;
calculating the curvatures at the extrema points (502, 504, 506, 508) of the speech signal (100, 500) based on a normalized phoneme function, $\varphi(t)$, wherein the normalized phoneme function $\varphi(t)$ is a function of a time period $T = 1/f_0$ of the phoneme function p(t) and a value $\max(|p^{min}|, |p^{max}|)$ of the phoneme function p(t) by;

$$\varphi(t) = \frac{p\left(\dfrac{T}{2\pi}t\right)}{\max\left(\left|p^{min}\right|, \left|p^{max}\right|\right)} \ ;$$

wherein the value $\max(|p^{min}|, |p^{max}|)$ of the phoneme function p(t) is the larger of an absolute value of maximum value $p^{max}$ of the phoneme function p(t); and
an absolute value of minimum value $p^{min}$ of the phoneme function p(t);

wherein the calculating of the curvatures at the extrema points (502, 504, 506, 508) is performed by:

$$\eta(t) = \frac{\dfrac{d^2\varphi}{dt^2}}{\sqrt{\left(1+\left(\dfrac{d\varphi}{dt}\right)^2\right)^3}} \; ;$$

comparing the calculated curvatures with reference curvatures of phonemes;
when a sequence of the calculated curvatures matches a sequence of the reference curvatures, identifying a corresponding phoneme.

6. The method of claim 5, further comprising:

dividing the speech signal (100, 500) into frames; and
comparing coordinates of the extrema points (502, 504, 506, 508) of the speech signal (100, 500) with reference coordinates of the phonemes; and

identifying the corresponding phoneme, comprising:

identifying the corresponding phoneme when the sequence of the calculated curvatures match the sequence of the reference curvatures and coordinates of the extrema points (502, 504, 506, 508) of the speech signal (100, 500) corresponding to the sequence of the calculated curvatures match a set of the reference coordinates.

7. The method of claim 5 or 6, wherein:

the reference curvatures of phonemes and the reference coordinates of the phonemes are stored in the device; or
the reference curvatures of phonemes and the reference coordinates of the phonemes are stored in a remote system accessible over a network.

8. The method of claim 5, wherein the base frequency for the speech signal (100, 500) is determined in response to a voice input received at the computing device.

9. A computer system for phoneme identification, comprising:

a memory adapted to store program code; and
a processor adapted to execute the program code to perform operations comprising:

determining base frequency, $f_0$, for a speech signal (100, 500), wherein the speech signal (100, 500) is considered as a flat curve (400), wherein the speech signal (100, 500) comprises extrema points (502, 504, 506, 508) where the speech signal (100, 500) changes direction resulting in a curvature at each extrema point;

wherein the speech signal (100, 500) is represented as a value of air pressure over a period of time, t and wherein a phoneme that is part of the speech signal (100, 500) is represented by a phoneme function p(t) which represents this air pressure over time;

calculating the curvatures at the extrema points (502, 504, 506, 508) of the speech signal (100, 500) based on a normalized phoneme function, $\varphi(t)$, wherein the normalized phoneme function $\varphi(t)$ is a function of a time period $T = 1/f_0$ of the phoneme function p(t) and a value $\max(|p^{min}|,|p^{max}|)$ of the phoneme function p(t) by;

$$\varphi(t) = \frac{p(\frac{T}{2\pi}t)}{\max(\left|p^{min}\right|,\left|p^{max}\right|)} \; ;$$

wherein the value max($\left|p^{min}\right|$,$\left|p^{max}\right|$) of the phoneme function p(t) is the larger of an absolute value of maximum value $p^{max}$ of the phoneme function p(t); and
an absolute value of minimum value $p^{min}$ of the phoneme function p(t);

wherein the calculating of the curvatures at the extrema points (502, 504, 506, 508) is performed by:

$$\eta(t) = \frac{\frac{d^2\varphi}{dt^2}}{\sqrt{\left(1+\left(\frac{d\varphi}{dt}\right)^2\right)^3}} \; ;$$

comparing the calculated curvatures with reference curvatures of phonemes;
when a sequence of the calculated curvatures matches a sequence of the reference curvatures, identifying a corresponding phoneme.

10. The system of claim 9, wherein the processor further executes the program code to perform operations further comprising:

dividing the speech signal (100, 500) into frames; and
comparing coordinates of the extrema points (502, 504, 506, 508) of the speech signal (100, 500) with reference coordinates of the phonemes; and

identifying the corresponding phoneme, comprising:

identifying the corresponding phoneme when the sequence of the calculated curvatures match the sequence of the reference curvatures and coordinates of the extrema points (502, 504, 506, 508) of the speech signal (100, 500) corresponding to the sequence of the calculated curvatures match a set of the reference coordinates.

11. The system of claim 9 or 10, wherein:

the reference curvatures of phonemes and the reference coordinates of the phonemes are stored in the computer system; or
the reference curvatures of phonemes and the reference coordinates of the phonemes are stored in a remote system accessible over a network.

12. The system of claim 9 or 10, wherein the base frequency for the speech signal (100, 500) is determined in response to a voice input received at a computing device.

**Patentansprüche**

1. Nicht flüchtiges, computerlesbares Speichermedium zum gegenständlichen bzw. physischen Speichern von Befehlen, die, wenn sie von einem Computer ausgeführt werden, geeignet sind, den Computer zu veranlassen, Operationen durchzuführen, die umfassen:

an einer Rechenvorrichtung, Bestimmen einer Basis- bzw. Grundfrequenz, $f_0$, für ein Sprachsignal (100, 500), wobei das Sprachsignal (100, 500) als eine flache Kurve (400) angesehen wird, wobei das Sprachsignal (100, 500) Extrempunkte (502, 504, 506, 508) umfasst, wo das Sprachsignal (100, 500) die Richtung ändert, was zu einer Krümmung an jedem Extrempunkt führt;

wobei das Sprachsignal (100, 500) als ein Luftdruckwert über einen Zeitraum, t, dargestellt ist, und wobei ein Phonem, das Teil des Sprachsignals (100, 500) ist, durch eine Phonemfunktion p(t) dargestellt ist, die den Luftdruck über Zeit darstellt;

Berechnen der Krümmungen an den Extrempunkten (502, 504, 506, 508) des Sprachsignals (100, 500) basierend auf einer normierten Phonemfunktion, $\varphi(t)$, wobei die normierte Phonemfunktion $\varphi(t)$ eine Funktion eines Zeitraums $T = 1/f_0$ der Phonemfunktion p(t) und eines Werts $\max(|p^{min}|,|p^{max}|)$ der Phonemfunktion p(t) durch:

$$\varphi(t) = \frac{p\left(\frac{T}{2\pi}t\right)}{\max\left(\left|p^{min}\right|,\left|p^{max}\right|\right)}$$

ist;

wobei der Wert $\max(|p^{min}|,|p^{max}|)$ der Phonemfunktion p(t) der größere eines Absolutwerts des Maximalwerts $p^{max}$ der Phonemfunktion p(t); und

eines Absolutwerts des Minimalwerts $p^{min}$ der Phonemfunktion p(t) ist;

wobei das Berechnen der Krümmungen an den Extrempunkten (502, 504, 506, 508) durchgeführt wird durch:

$$\eta(t) = \frac{\dfrac{d^2\varphi}{dt^2}}{\sqrt{\left(1+\left(\dfrac{d\varphi}{dt}\right)^2\right)^3}} \; ;$$

Vergleichen der berechneten Krümmungen mit Referenzkrümmungen von Phonemen;

wenn eine Sequenz der berechneten Krümmungen mit einer Sequenz der Referenzkrümmungen übereinstimmt, Identifizieren eines entsprechenden Phonems.

2. Computerlesbares Speichermedium nach Anspruch 1, umfassend Befehle, die, wenn sie von dem Computer ausgeführt werden, den Computer veranlassen, Operationen durchzuführen, die ferner umfassen:

Teilen des Sprachsignals (100, 500) in Frames bzw. Rahmen; und

Vergleichen von Koordinaten der Extrempunkte (502, 504, 506, 508) des Sprachsignals (100, 500) mit Referenzkoordinaten der Phoneme; und

Identifizieren des entsprechenden Phonems, umfassend:

Identifizieren des entsprechenden Phonems, wenn die Sequenz der berechneten Krümmungen mit der Sequenz der Referenzkrümmungen übereinstimmt und Koordinaten der Extrempunkte (502, 504, 506, 508) des Sprachsignals (100, 500), die der Sequenz der berechneten Krümmungen entsprechen, mit einem Satz der Referenzkoordinaten übereinstimmen.

3. Computerlesbares Speichermedium nach Anspruch 1 oder 2, wobei:

die Referenzkrümmungen von Phonemen und die Referenzkoordinaten der Phoneme in der Vorrichtung gespeichert sind; oder

die Referenzkrümmungen von Phonemen und die Referenzkoordinaten der Phoneme in einem entfernten System gespeichert sind, das über ein Netzwerk zugänglich ist.

4. Computerlesbares Speichermedium nach Anspruch 1, wobei die Basisfrequenz für das Sprachsignal (100, 500) als Antwort auf eine Spracheingabe bestimmt wird, die an der Rechenvorrichtung empfangen wird.

5. Computerimplementiertes Verfahren zur Phonemidentifikation, wobei das Verfahren umfasst:

an einer Rechenvorrichtung, Bestimmen einer Basis- bzw. Grundfrequenz, $f_0$, für ein Sprachsignal (100, 500), wobei das Sprachsignal (100, 500) als eine flache Kurve (400) angesehen wird, wobei das Sprachsignal (100, 500) Extrempunkte (502, 504, 506, 508) umfasst, wo das Sprachsignal (100, 500) die Richtung ändert, was zu einer Krümmung an jedem Extrempunkt führt;

wobei das Sprachsignal (100, 500) als ein Luftdruckwert über einen Zeitraum, t, dargestellt ist, und wobei ein Phonem, das Teil des Sprachsignals (100, 500) ist, durch eine Phonemfunktion p(t) dargestellt ist, die den Luftdruck über Zeit darstellt;

Berechnen der Krümmungen an den Extrempunkten (502, 504, 506, 508) des Sprachsignals (100, 500) basierend auf einer normierten Phonemfunktion, φ(t), wobei die normierte Phonemfunktion φ(t) eine Funktion eines Zeitraums $T = 1/f_0$ der Phonemfunktion p(t) und eines Werts $\max(|p^{min}|, |p^{max}|)$ der Phonemfunktion p(t) durch:

$$\varphi(t) = \frac{p(\frac{T}{2\pi}t)}{\max(|p^{min}|,|p^{max}|)}$$

ist;

wobei der Wert $\max(|p^{min}|, |p_{max}|)$ der Phonemfunktion p(t) der größere eines Absolutwerts des Maximalwerts $p^{max}$ der Phonemfunktion p(t); und
eines Absolutwerts des Minimalwerts $p^{min}$ der Phonemfunktion p(t) ist;

wobei das Berechnen der Krümmungen an den Extrempunkten (502, 504, 506, 508) durchgeführt wird durch:

$$\eta(t) = \frac{\frac{d^2\varphi}{dt^2}}{\sqrt{\left(1+\left(\frac{d\varphi}{dt}\right)^2\right)^3}} ;$$

Vergleichen der berechneten Krümmungen mit Referenzkrümmungen von Phonemen;
wenn eine Sequenz der berechneten Krümmungen mit einer Sequenz der Referenzkrümmungen übereinstimmt, Identifizieren eines entsprechenden Phonems.

6. Verfahren nach Anspruch 5, ferner umfassend:

Teilen des Sprachsignals (100, 500) in Frames bzw. Rahmen; und
Vergleichen von Koordinaten der Extrempunkte (502, 504, 506, 508) des Sprachsignals (100, 500) mit Referenzkoordinaten der Phoneme; und
Identifizieren des entsprechenden Phonems, umfassend:

Identifizieren des entsprechenden Phonems, wenn die Sequenz der berechneten Krümmungen mit der Sequenz der Referenzkrümmungen übereinstimmt und Koordinaten der Extrempunkte (502, 504, 506, 508) des Sprachsignals (100, 500), die der Sequenz der berechneten Krümmungen entsprechen, mit einem Satz der Referenzkoordinaten übereinstimmen.

7. Verfahren nach Anspruch 5 oder 6, wobei:

die Referenzkrümmungen von Phonemen und die Referenzkoordinaten der Phoneme in der Vorrichtung gespeichert sind; oder
die Referenzkrümmungen von Phonemen und die Referenzkoordinaten der Phoneme in einem entfernten System gespeichert sind, das über ein Netzwerk zugänglich ist.

8. Verfahren nach Anspruch 5, wobei die Basisfrequenz für das Sprachsignal (100, 500) als Antwort auf eine Spracheingabe bestimmt wird, die an der Rechenvorrichtung empfangen wird.

9. Computersystem zur Phonemidentifikation, umfassend:

einen Speicher, der angepasst ist, Programmcode zu speichern; und
einen Prozessor, der angepasst ist, den Programmcode auszuführen, um Operationen durchzuführen, die umfassen:

Bestimmen einer Basis- bzw. Grundfrequenz, $f_0$, für ein Sprachsignal (100, 500), wobei das Sprachsignal (100, 500) als eine flache Kurve (400) angesehen wird, wobei das Sprachsignal (100, 500) Extrempunkte (502, 504, 506, 508) umfasst, wo das Sprachsignal (100, 500) die Richtung ändert, was zu einer Krümmung an jedem Extrempunkt führt;

wobei das Sprachsignal (100, 500) als ein Luftdruckwert über einen Zeitraum, t, dargestellt ist, und wobei ein Phonem, das Teil des Sprachsignals (100, 500) ist, durch eine Phonemfunktion p(t) dargestellt ist, die den Luftdruck über Zeit darstellt;
Berechnen der Krümmungen an den Extrempunkten (502, 504, 506, 508) des Sprachsignals (100, 500) basierend auf einer normierten Phonemfunktion, φ(t), wobei die normierte Phonemfunktion φ(t) eine Funktion eines Zeitraums $T = 1/f_0$ der Phonemfunktion p(t) und eines Werts $\max(|p^{min}|, |p^{max}|)$ der Phonemfunktion p(t) durch:

$$\varphi(t) = \frac{p\left(\frac{T}{2\pi}t\right)}{\max\left(\left|p^{min}\right|, \left|p^{max}\right|\right)}$$

ist;

wobei der Wert $\max(|p^{min}|, |p^{max}|)$ der Phonemfunktion p(t) der größere eines Absolutwerts des Maximalwerts $p^{max}$ der Phonemfunktion p(t); und
eines Absolutwerts des Minimalwerts $p^{min}$ der Phonemfunktion p(t) ist;

wobei das Berechnen der Krümmungen an den Extrempunkten (502, 504, 506, 508) durchgeführt wird durch:

$$\eta(t) = \frac{\dfrac{d^2\varphi}{dt^2}}{\sqrt{\left(1+\left(\dfrac{d\varphi}{dt}\right)^2\right)^3}} \; ;$$

Vergleichen der berechneten Krümmungen mit Referenzkrümmungen von Phonemen;
wenn eine Sequenz der berechneten Krümmungen mit einer Sequenz der Referenzkrümmungen übereinstimmt, Identifizieren eines entsprechenden Phonems.

10. System nach Anspruch 9, wobei der Prozessor ferner den Programmcode ausführt, um Operationen durchzuführen, die ferner umfassen:

Teilen des Sprachsignals (100, 500) in Frames bzw. Rahmen; und
Vergleichen von Koordinaten der Extrempunkte (502, 504, 506, 508) des Sprachsignals (100, 500) mit Referenzkoordinaten der Phoneme; und

Identifizieren des entsprechenden Phonems, umfassend:

Identifizieren des entsprechenden Phonems, wenn die Sequenz der berechneten Krümmungen mit der Sequenz der Referenzkrümmungen übereinstimmt und Koordinaten der Extrempunkte (502, 504, 506, 508) des Sprachsignals (100, 500), die der Sequenz der berechneten Krümmungen entsprechen, mit einem Satz der Referenzkoordinaten übereinstimmen.

**11.** System nach Anspruch 9 oder 10, wobei:

die Referenzkrümmungen von Phonemen und die Referenzkoordinaten der Phoneme in dem Computersystem gespeichert sind; oder
die Referenzkrümmungen von Phonemen und die Referenzkoordinaten der Phoneme in einem entfernten System gespeichert sind, das über ein Netzwerk zugänglich ist.

**12.** System nach Anspruch 9 oder 10, wobei die Basisfrequenz für das Sprachsignal (100, 500) als Antwort auf eine Spracheingabe bestimmt wird, die an der Rechenvorrichtung empfangen wird.

**Revendications**

**1.** Support de stockage non transitoire lisible par ordinateur pour stocker de manière tangible des instructions qui sont adaptées, lors de leur exécution par un ordinateur, à amener l'ordinateur à réaliser des opérations comprenant :

au niveau d'un dispositif informatique, déterminer une fréquence de base, $f_0$, pour un signal vocal (100, 500), dans lequel le signal vocal (100, 500) est considéré comme une courbe plate (400), dans lequel le signal vocal (100, 500) comprend des points d'extrema (502, 504, 506, 508) où le signal vocal (100, 500) change de direction, résultant en une courbure à chaque point d'extrema ;
dans lequel le signal vocal (100, 500) est représenté comme une valeur de pression d'air sur une période de temps t et dans lequel un phonème qui fait partie du signal vocal (100, 500) est représenté par une fonction de phonème p(t) qui représente cette pression d'air dans le temps ;
calculer les courbures aux points d'extrema (502, 504, 506, 508) du signal vocal (100, 500) en fonction d'une fonction de phonème normalisée, $\varphi(t)$, dans lequel la fonction de phonème normalisée $\varphi(t)$ est une fonction d'une période de temps $T = 1/f_0$ de la fonction de phonème p(t) et d'une valeur $\max(|p^{min}|,|p^{max}|)$ de la fonction de phonème p(t) par :

$$\varphi(t) = \frac{p(\frac{T}{2\pi}t)}{\max(|p^{min}|,|p^{max}|)} \; ;$$

dans lequel la valeur $\max(|p^{min}|,|p^{max}|)$ de la fonction de phonème p(t) est la plus élevée d'une valeur absolue de la valeur maximale $p^{max}$ de la fonction de phonème p(t) ; et d'une valeur absolue de la valeur minimale $p^{min}$ de la fonction de phonème p(t) ;
dans lequel le calcul des courbures aux points d'extrema (502, 504, 506, 508) est réalisé par :

$$\eta(t) = \frac{\frac{d^2\varphi}{dt^2}}{\sqrt{\left(1+\left(\frac{d\varphi}{dt}\right)^2\right)^3}} \; ;$$

comparer les courbures calculées à des courbures de référence de phonèmes ; lorsqu'une séquence des courbures calculées correspond à une séquence des courbures de référence, identifier un phonème correspondant.

2. Support de stockage lisible par ordinateur selon la revendication 1, comprenant des instructions qui, lors de leur exécution par l'ordinateur, amènent l'ordinateur à réaliser des opérations comprenant en outre :

diviser le signal vocal (100, 500) en trames ; et
comparer des coordonnées des points d'extrema (502, 504, 506, 508) du signal vocal (100, 500) à des coordonnées de référence des phonèmes ; et

identifier le phonème correspondant comprenant :

identifier le phonème correspondant lorsque la séquence des courbures calculées correspond à la séquence des courbures de référence et des coordonnées des points d'extrema (502, 504, 506, 508) du signal vocal (100, 500) correspondant à la séquence des courbures calculées correspondent à un ensemble des coordonnées de référence.

3. Support de stockage lisible par ordinateur selon la revendication 1 ou 2, dans lequel :

les courbures de référence de phonèmes et les coordonnées de référence des phonèmes sont stockées dans le dispositif ; ou
les courbures de référence de phonèmes et les coordonnées de référence des phonèmes sont stockées dans un système à distance accessible sur un réseau.

4. Support de stockage lisible par ordinateur selon la revendication 1, dans lequel la fréquence de base pour le signal vocal (100, 500) est déterminée en réponse à une entrée vocale reçue au niveau du dispositif informatique.

5. Procédé mis en oeuvre par ordinateur pour l'identification de phonèmes, le procédé comprenant :

au niveau d'un dispositif informatique, déterminer une fréquence de base, $f_0$, pour un signal vocal (100, 500), dans lequel le signal vocal (100, 500) est considéré comme une courbe plate (400), dans lequel le signal vocal (100, 500) comprend des points d'extrema (502, 504, 506, 508) où le signal vocal (100, 500) change de direction, résultant en une courbure à chaque point d'extrema ;
dans lequel le signal vocal (100, 500) est représenté comme une valeur de pression d'air sur une période de temps t et dans lequel un phonème qui fait partie du signal vocal (100, 500) est représenté par une fonction de phonème p(t) qui représente cette pression d'air dans le temps ;
calculer les courbures aux points d'extrema (502, 504, 506, 508) du signal vocal (100, 500) en fonction d'une fonction de phonème normalisée, $\varphi(t)$, dans lequel la fonction de phonème normalisée $\varphi(t)$ est une fonction d'une période de temps $T = 1/f_0$ de la fonction de phonème p(t) et d'une valeur $Max(|p^{min}|, |p^{max}|)$ de la fonction de phonème p(t) par :

$$\varphi(t) = \frac{p\left(\frac{T}{2\pi}t\right)}{\max\left(\left|p^{min}\right|, \left|p^{max}\right|\right)} ;$$

dans lequel la valeur $\max(|p^{min}|, |p^{max}|)$ de la fonction de phonème p(t) est la plus élevée d'une valeur absolue de la valeur maximale $p^{max}$ de la fonction de phonème p(t) ; et d'une valeur absolue de la valeur minimale $p^{min}$ de la fonction de phonème p(t) ;
dans lequel le calcul des courbures aux points d'extrema (502, 504, 506, 508) est réalisé par :

$$\eta(t) = \frac{\dfrac{d^2\varphi}{dt^2}}{\sqrt{\left(1 + \left(\dfrac{d\varphi}{dt}\right)^2\right)^3}} \; ;$$

comparer les courbures calculées à des courbures de référence de phonèmes ; lorsqu'une séquence des courbures calculées correspond à une séquence des courbures de référence, identifier un phonème correspondant.

6. Procédé selon la revendication 5, comprenant en outre :

diviser le signal vocal (100, 500) en trames ; et
comparer des coordonnées des points d'extrema (502, 504, 506, 508) du signal vocal (100, 500) à des coordonnées de référence des phonèmes ; et

identifier le phonème correspondant comprenant :

identifier le phonème correspondant lorsque la séquence des courbures calculées correspond à la séquence des courbures de référence et des coordonnées des points d'extrema (502, 504, 506, 508) du signal vocal (100, 500) correspondant à la séquence des courbures calculées correspondent à un ensemble des coordonnées de référence.

7. Procédé selon la revendication 5 ou 6, dans lequel :

les courbures de référence de phonèmes et les coordonnées de référence des phonèmes sont stockées dans le dispositif ; ou
les courbures de référence de phonèmes et les coordonnées de référence des phonèmes sont stockées dans un système à distance accessible sur un réseau.

8. Procédé selon la revendication 5, dans lequel la fréquence de base pour le signal vocal (100, 500) est déterminée en réponse à une entrée vocale reçue au niveau du dispositif informatique.

9. Système informatique pour l'identification de phonèmes comprenant :

une mémoire adaptée à stocker du code de programme ; et
un processeur adapté à exécuter le code de programme pour réaliser des opérations comprenant :

déterminer une fréquence de base, $f_0$, pour un signal vocal (100, 500), dans lequel le signal vocal (100, 500) est considéré comme une courbe plate (400), dans lequel le signal vocal (100, 500) comprend des points d'extrema (502, 504, 506, 508) où le signal vocal (100, 500) change de direction, résultant en une courbure à chaque point d'extrema ;
dans lequel le signal vocal (100, 500) est représenté comme une valeur de pression d'air sur une période de temps t et dans lequel un phonème qui fait partie du signal vocal (100, 500) est représenté par une fonction de phonème p(t) qui représente cette pression d'air dans le temps ;
calculer les courbures aux points d'extrema (502, 504, 506, 508) du signal vocal (100, 500) en fonction d'une fonction de phonème normalisée, $\varphi(t)$, dans lequel la fonction de phonème normalisée $\varphi(t)$ est une fonction d'une période de temps $T = 1/f_0$ de la fonction de phonème p(t) et d'une valeur $\max(|p^{min}|, |p^{max}|)$ de la fonction de phonème p(t) par :

$$\varphi(t) = \frac{p\left(\frac{T}{2\pi}t\right)}{\max\left(\left|p^{\min}\right|, \left|p^{\max}\right|\right)} \; ;$$

dans lequel la valeur $\max(|p^{\min}|, |p^{\max}|)$ de la fonction de phonème p(t) est la plus élevée d'une valeur absolue de la valeur maximale $p^{\max}$ de la fonction de phonème p(t) ; et d'une valeur absolue de la valeur minimale $p^{\min}$ de la fonction de phonème p(t) ;
dans lequel le calcul des courbures aux points d'extrema (502, 504, 506, 508) est réalisé par :

$$\eta(t) = \frac{\frac{d^2\varphi}{dt^2}}{\sqrt{\left(1 + \left(\frac{d\varphi}{dt}\right)^2\right)^3}} \; ;$$

comparer les courbures calculées à des courbures de référence de phonèmes ; lorsqu'une séquence des courbures calculées correspond à une séquence des courbures de référence, identifier un phonème correspondant.

10. Système selon la revendication 9, dans lequel le processeur exécute en outre le code de programme pour réaliser des opérations comprenant en outre :

diviser le signal vocal (100, 500) en trames ; et
comparer des coordonnées des points d'extrema (502, 504, 506, 508) du signal vocal (100, 500) à des coordonnées de référence des phonèmes ; et

identifier le phonème correspondant comprenant :

identifier le phonème correspondant lorsque la séquence des courbures calculées correspond à la séquence des courbures de référence et des coordonnées des points d'extrema (502, 504, 506, 508) du signal vocal (100, 500) correspondant à la séquence des courbures calculées correspondent à un ensemble des coordonnées de référence.

11. Système selon la revendication 9 ou 10, dans lequel :

les courbures de référence de phonèmes et les coordonnées de référence des phonèmes sont stockées dans le système informatique ; ou
les courbures de référence de phonèmes et les coordonnées de référence des phonèmes sont stockées dans un système à distance accessible sur un réseau.

12. Système selon la revendication 9 ou 10, dans lequel la fréquence de base pour le signal vocal (100, 500) est déterminée en réponse à une entrée vocale reçue au niveau d'un dispositif informatique.

**FIG. 1**

EP 2 887 347 B1

```
                                                                    ┌─ 202              ┌─ 200
                              ┌──────────────────────────────────────────────┐
                              │  DETERMINING BASE FREQUENCY FOR A SPEECH SIGNAL │
                              └──────────────────────────────────────────────┘
                                                      │
                                                      ▼            ┌─ 204
                              ┌──────────────────────────────────────────────┐
                              │        DIVIDING THE SPEECH SIGNAL INTO FRAMES   │
                              └──────────────────────────────────────────────┘
                                                      │
                                                      ▼            ┌─ 206
                              ┌──────────────────────────────────────────────┐
                              │ CALCULATING CURVATURES AT EXTREMA POINTS BASED  │
                              │       ON A NORMALIZED PHONEME FUNCTION           │
                              └──────────────────────────────────────────────┘
                                                      │
                                                      ▼            ┌─ 208
                              ┌──────────────────────────────────────────────┐
                              │  COMPARING THE CALCULATED CURVATURES WITH       │
                              │      REFERENCE CURVATURES OF PHONEMES           │
                              └──────────────────────────────────────────────┘
                                                      │
                                                      ▼            ┌─ 210
                              ┌──────────────────────────────────────────────┐
                              │ WHEN A SEQUENCE OF THE CALCULATED CURVATURES    │
                              │ MATCH A SEQUENCE OF THE REFERENCE CURVATURES,   │
                              │    IDENTIFYING A CORRESPONDING PHONEME           │
                              └──────────────────────────────────────────────┘
```

**FIG. 2**

FIG. 3

**FIG. 4**

EP 2 887 347 B1

**FIG. 5**

FIG. 6

EP 2 887 347 B1

```
                                                            ┌────── 704
                                                            │
┌──────── 700                          ┌─────────────────────────────────┐
│                                       │ REFERENCE CURVATURES AND COORDINATES │──── 706
┌─────────────────────────┐            │                                 │
│                         │            │                                 │
│  CALCULATED CURVATURES  │            │  PHONEME 1 CURVATURES AND COORDINATES │
│                         │            │  PHONEME 2 CURVATURES AND COORDINATES │
│  η₁, η₂, η₃, ... η₁₀    │            │  PHONEME 3 CURVATURES AND COORDINATES │
│                         │            │                                 │
└─────────────────────────┘            │                 .               │
                                       │                 .               │
┌──────── 702                          │                 .               │
│                                       │                                 │
┌─────────────────────────┐            │                                 │
│                         │            │  PHONEME N CURVATURES AND COORDINATES │
│ COORDINATES OF EXTREMA POINTS │      │                                 │
│                         │            └─────────────────────────────────┘
│      (t₁, p₁)           │                          │
│      (t₂, p₂)           │                          │  ┌───── 710
│         .               │                          ▼  │
│         .               │            ┌─────────────────────────┐
│         .               │            │    IDENTIFY PHONEME     │
│      (t₁₀, p₁₀)         │            └─────────────────────────┘
│                         │
└─────────────────────────┘
```

**CALCULATED CURVATURES** $\eta_1, \eta_2, \eta_3, \ldots \eta_{10}$ — 700

**COORDINATES OF EXTREMA POINTS** $(t_1, p_1)$ $(t_2, p_2)$ $\vdots$ $(t_{10}, p_{10})$ — 702

**REFERENCE CURVATURES AND COORDINATES** — 704, 706

PHONEME 1 CURVATURES AND COORDINATES
PHONEME 2 CURVATURES AND COORDINATES
PHONEME 3 CURVATURES AND COORDINATES

PHONEME N CURVATURES AND COORDINATES

**IDENTIFY PHONEME** — 710

**FIG. 7**

EP 2 887 347 B1

```
                                                    ┌──────── 804
                              ┌──────────────────────────────────┐
                              │        COMPUTING DEVICE           │
     ┌─ 802                   │                                   │
    (人)      ┌───────────┐   │      ┌──────────────────┐         │
             │ VOICE INPUT│──▶│      │  MEMORY 806      │         │
             │    800     │   │      └──────────────────┘         │
             └───────────┘   │                                   │
                              │      ┌──────────────────┐         │
                              │      │   PROCESSOR      │         │
                              │      │      808         │         │
                              │      └──────────────────┘         │
                              └──────────────────────────────────┘
```

FIG. 8

EP 2 887 347 B1

**FIG. 9**

**FIG. 10**

EP 2 887 347 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5708759 A
- US 2010114576 A1
- GB 2358253 A
- US 4813076 A

**Non-patent literature cited in the description**

- Continuous speech recognition using PLP analysis with multilayer perceptions. **MORGAN N et al.** SPEECH PROCESSING 1. TORONTO, MAY 14-17, 1991, [INTERNATIONAL CONFERENCE ON ACOUSTICS, SPEECH & SIGNAL PROCESSING. ICASSP. IEEE